# EUROPEAN PATENT SPECIFICATION

(11) **EP 1 022 992 B1**
(45) Date of publication and mention of the grant of the patent: **09.06.2004**
(21) Application number: 98938098.5
(22) Date of filing: 30.07.1998
(51) Int. Cl.: A61C 3/025, A61C 17/06

(54) **DENTAL ABRASION APPARATUS**
ZAHNÄRTZLICHE ABTRAGUNGSVORRICHTUNG
APPAREIL DENTAIRE D'ABRASION

(30) Priority: 17.10.1997 US 953079
(43) Date of publication of application: 02.08.2000
(73) Proprietor: DENTSPLY INTERNATIONAL, INC., York, Pennsylvania 17405 (US)
(72) Inventor: BRASSIL, John, Michael, North Brook,IL 60062 (US); CHANG, Shu, Kun, Evanston, IL 60202 (US); QUINTANA, Reynaldo, Jose, Menlo Park, CA 94025 (US); BERRY, Stephen, D., Plainfield, IL 60544 (US); AYZENSHTEYN, Mikhail, Buffalo Grove, IL 60089 (US)
(74) Representative: Wächtershäuser, Günter, Prof. Dr.
(86) International application number: PCT/US1998/015746
(87) International publication number: WO 1999/020197

(56) References cited:
- EP-A- 0 108 983
- EP-A- 0 557 251
- WO-A-93/10718
- US-A- 4 865 545

## Description

The present invention generally relates tools used in dentistry, and more particularly relates to apparatus for evacuating abrasive particles and other debris during dental procedures.

### Background Of The Invention

Air abrasion systems are generally known for abrading tooth and related structures during dental procedures. Air abrasion systems are used as an alternative to rotary drills and use a process similar to sand-blasting to remove tooth material. Air abrasion systems use a pressurized gas to propel abrasive material at an elevated velocity so that the abrasive material strikes and cuts the tooth. In this manner, the air abrasive system reduces the tooth by cutting, excavating, or etching the enamel and dentin layers. Associated tooth structures, such as fillings, crowns, caps, and composites, are also removed during air abrasion procedures. Evacuation systems are typically used to collect the debris created during abrasion procedures. These systems often encounter blood, saliva, and water, and therefore must handle liquid and biological materials in addition to the solid debris.

Conventional evacuation apparatus does not adequately filter liquid materials and therefore does not provide for intra-oral evacuation. Evacuation systems are most beneficial when they not only evacuate the area surrounding the mouth but also perform intra-oral evacuation to clear materials from inside the mouth. Conventional apparatus typically use only a filter to remove debris from the suction flow. These filters, however, do not effectively remove liquids from the suction flow and therefore are not useful for intra-oral applications..

Conventional evacuation apparatus further fails to filter fine particles from the suction flow and limits the amount of suction flow through the system. Previous evacuation systems simply place a filter upstream of evacuation means for collecting debris. It will be appreciated that the filter must be placed in the suction flow so that as the filter removes debris, it restricts suction flow. Accordingly, the filters are typically selected to have relatively large pores so that the filter lasts longer before clogging and choking off the suction flow. The larger pores, however, do not collect fine particles which are passed through the filter and discharged to atmosphere. Conventional evacuation systems therefore not only create a mess, but present a potential health risk when the particles are biological material from a patient.

Another problem with conventional evacuation apparatus is that it is overly bulky and burdensome to use. Conventional evacuation apparatus typically use an oversized filter having a larger filter area which is more slowly clogged, thereby attempting to maintain adequate suction flow through the apparatus. The oversized filter, however, takes up additional space and therefore is overly bulky. Furthermore, the filter of conventional apparatus quickly clogs with debris, thereby requiring frequent replacement.

A significant problem with the use of conventional air abrasion systems is the mess created during dental procedures. Much of the powder delivered by the system accumulates in the patients mouth. While the abrasive material is not medically harmful to the patient, excessive build-up of material is uncomfortable. Furthermore, some of the abrasive material bounces or reflects out of the month to be deposited in the surrounding area, including the clothes of the patient, office furniture, and dental tools.

Conventional air abrasion systems typically have a problem with residual abrasive material partially clogging in the abrasion system, thereby adding to the mess associated with abrasion procedures. When a blast of gas-abrasive mixture is delivered by the abrasive system, the mixture travels from the system through a hose and a hand piece. Upon completing a blast, residual abrasive material tends to remain in the hose and hand piece, thereby partially blocking passage through the system. When a subsequent blast of gas-abrasive mixture is sent from the abrasive system, it is resisted by the residual abrasive material which lowers the velocity of subsequent blast. As a result, the subsequent blast exits the hand piece at a velocity which may not be sufficient to reduce tooth structure. In addition, the lower velocity blast is more easily dispersed and therefore often results in a puff of abrasive material rather than a directed stream, which also collects in the area surrounding the patient rather than in the patient's mouth.

### Summary Of The Invention

A general aim of the present invention is provide evacuation apparatus for collecting abrasive material during dental procedures having improved suction characteristics.

In that regard, it is an object of the present invention to provide evacuation apparatus which effectively performs intra-oral evacuation.

Further in that regard, it is an object of the present invention to provide evacuation apparatus which maximizes the period of operation at full suction flow.

A related object of the present invention is to provide evacuation apparatus which maximizes filter life.

It is also an object of the present invention to provide an air abrasive system with integral evacuation apparatus which minimizes the amount of mess created during dental procedures.

In that regard, a more detailed object of the present invention is to provide an air abrasion system which eliminates residual abrasive material and incorporates improved evacuation apparatus.

In light of the above, the present invention provides an improved evacuation system for collecting spent abrasive material which includes a cyclone separator located upstream of the filter for removing abrasive material and other debris from the suction air flow. The cyclone separator is sized to remove particulates having a mass greater than air. The particulates are collected in a cup attached to the cyclone separator which is easily removed, emptied, and replaced. Any remaining particulates are collected by the filter before the suction flow reaches the pump. The cyclone separator allows full suction flow regardless how full the cup is and increases the effective life of the filter. The cyclone separator effectively removes liquids in addition to the solid debris. As a result, a filter having smaller pores may be used so that the apparatus collects fine particles.

The present invention also provides an air abrasion system with continuous purge feature for eliminating residual abrasive material in the hose and hand piece which, in combination with the improved evacuation apparatus, reduces the amount of mess generated by the air abrasion system during dental procedures. The air abrasion system advantageously incorporates a purge feature which continuously delivers pressurized gas through the hose and hand piece to eliminate any residual abrasive material. As a result, the air abrasion system does not deliver puffs of abrasive material but instead delivers focused streams. The evacuation apparatus effectively collects abrasive material and other debris from the mouth area of the patient, no matter how much material has collected in the cup of the cyclone separator.

These and other aims, objectives, and advantages of the invention will become more apparent from the following detailed description when taken in conjunction with the accompanying drawings.

### Brief Description Of The Drawings

FIGURE 1 is a partial schematic perspective view of the evacuation apparatus in accordance with the present invention attached to a hose, evacuation hand piece, and abrasion system.
FIG. 2 is a perspective view of the components of an air abrasion system having a continuous purge feature for use with the evacuation apparatus shown in FIG. 1.
FIG. 3 is an enlarged perspective view of an evacuation hand piece for use with the evacuation system.
FIG. 4 is a full cross-sectional view of the evacuation hand piece taken along line 4-4 of FIG. 3.
FIG. 5 is an enlarged perspective view of the cyclone separator shown in FIG. 1.

While the invention is susceptible of various modifications and alternative constructions, certain illustrative embodiments thereof have been shown in the drawings and will be described below in detail. It should be understood, however, that there is no intention to limit the invention to the specific forms disclosed, but on the contrary, the intention is to cover all modifications, alternative constructions, and equivalents falling within the spirit and scope of the invention as defined by the appended claims.

### Detailed Description Of The Preferred Embodiments

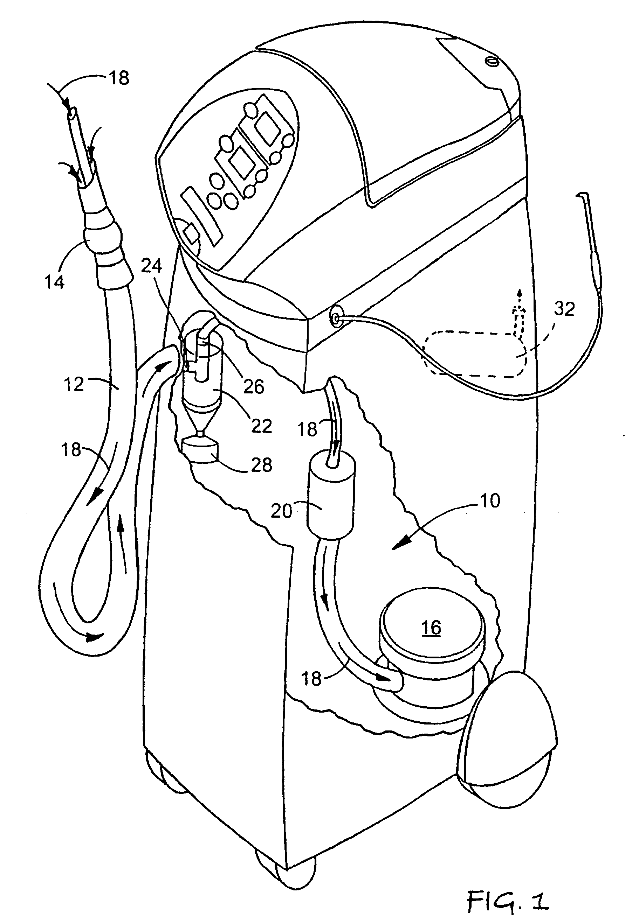

Referring now to the drawings, FIG. 1 shows the components of evacuation apparatus 10 in accordance with the present invention in partially schematic form. The evacuation apparatus 10 is attached to a hose 12 leading to an evacuation hand piece 14. The hand piece 14 is positioned near the mouth of the patient so that abrasive material and other debris is pulled by a suction flow through the hand piece and hose to be collected by the evacuation apparatus.

Referring to FIG. 1 in greater detail, it will be seen that the evacuation apparatus includes a vacuum pump 16 for creating a suction flow through the evacuation apparatus, indicated by arrows 18. Located upstream of the suction flow from the vacuum pump is a filter 20. The filter 20 removes abrasive material and other debris from the suction flow 18 so that the vacuum pump 16 is not damaged by these particulates and allows particulate-free discharge to atmosphere. In the preferred embodiment, the filter 20 is a high efficiency particulate air (or HEPA) filter.

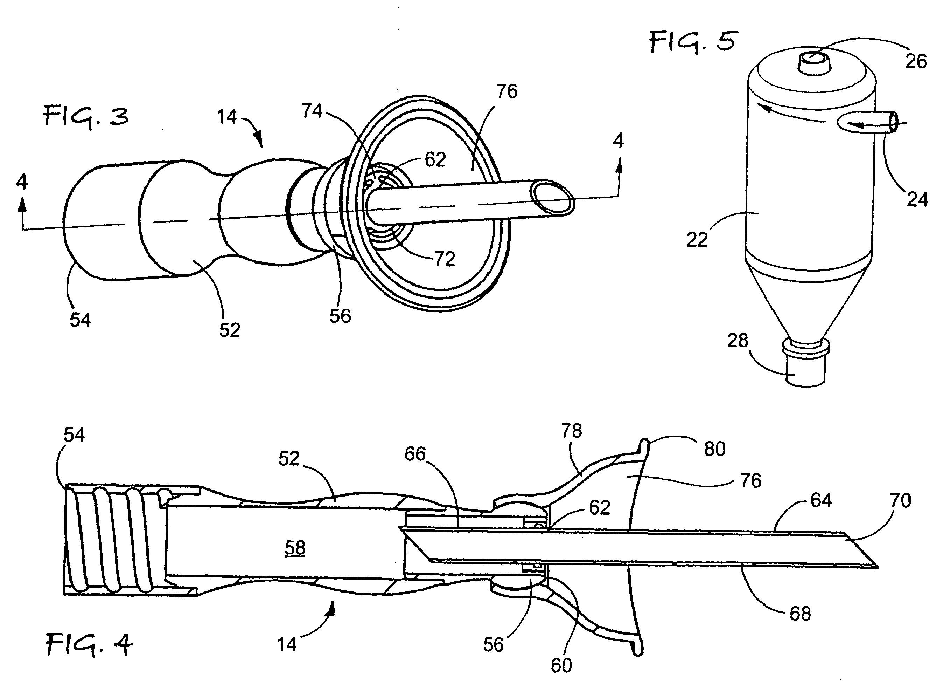

In accordance with certain aspects of the present invention, the evacuation apparatus 10 incorporates a cyclone separator 22 located upstream of the filter 20 for removing particulates from the suction flow 18. As best shown in FIG. 5, the cyclone separator 22 has an inlet port 24 connected to the hose 12 which leads to the evacuation hand piece 14. An outlet port 26 of the cyclone separator 22 is fluidly connected to the filter 20. A cup 28 is connected to the bottom of the cyclone separator 22. The cyclone separator has a generally conical shape which is sized to remove those particulates from the suction air which have a mass greater than air.

In operation, the suction flow 18 enters the cyclone separator 22 through the inlet port 24 and exits through the outlet port 26. The suction flow is introduced into the cyclone separator 22 on a tangent so that the conical side wall of the separator forces the flow into a circular motion (FIG. 5). The greater mass of the particulates carried by the suction air increases the centrifugal force acting on the particulates. The increased centrifugal force is directed toward the side wall of the cyclone separator 22 and therefore tends to push the particulates towards the side wall rather than allowing them to exit through the outlet port 26 located near the top center of the separator. As a result, air is allowed to exit the separator while the heavier particulates are not. The particulates continue to travel in the circular motion in contact with the side wall so that friction reduces the velocity of the particulates until they drop down into the cup 28, which is located outside of the suction flow. It will be appreciated that the particulates typically encountered during dental procedures, such as abrasive material, tooth and associated structures, saliva, and water, generally have a mass greater than air and therefore will be removed from the suction flow 18 by the cyclone separator 22. The cyclone separator removes from the suction flow at least 90 and preferably at least 97% of the particulates having a mass greater than air. Any particulates not removed by the cyclone separator are collected by the filter 20. It will therefore be appreciated that the cyclone separator 22 and the filter 20 form a two-stage filter means for removing debris from the suction air flow.

The cup 28 is releasably attached to the bottom of the cyclone separator 22 by connection means. The connection means preferably take the form of mating threads on the separator 22 and cup 28, however other connection means may be used in accordance with the present invention. Particulates which collect in the cup 28 are disposed of by removing the cup from the cyclone separator 22, emptying the cup, and reattaching the cup to the cyclone separator. The evacuation system 10 of the present invention therefore has significantly lower maintenance requirements than conventional systems.

The use of the cyclone separator 22 advantageously allows the evacuation apparatus 10 to operate at substantially full suction flow for increased periods of use. The cyclone separator 22 performs a majority of particulate removal from the suction flow 18. As a result, the filter 20 does not clog as quickly and therefore does not restrict the suction flow through the evacuation apparatus 10. Furthermore, suction flow through the evacuation apparatus is not restricted by the cyclone separator 22, even when the cup 28 is full. The reduced clogging created by the cyclone separator allows the filter to have a smaller physical size and extends the life of the filter 20 since a majority of particulates are removed by the cyclone separator 22.

The cyclone separator 22 further allows the evacuation apparatus to perform intra-oral evacuation. Intra-oral evacuation removes debris from inside the mouth and therefore liquids such as blood, saliva, and water are encountered. The cyclone separator 22 adequately removes liquids, thereby preventing them from reaching, and passing through, the filter.

The cyclone separator 22 also allows the apparatus to collect finer particles from the suction air flow. Because the cyclone separator 22 removes larger debris, the filter 20 does not become clogged. As a result, the filter 20 may have smaller pores to remove fine particles and biological materials which may not separate at the cyclone 22 and would otherwise pass through a filter having larger pores.

In the preferred embodiment, the evacuation hand piece 14 provides both intra- and extra-oral evacuation.

The evacuation hand piece 14 is connected to the inlet port 24 of the cyclone separator 22 by the hose 12 FIG. 1). The evacuation hand piece 14 generally comprises a body member 52 having connection and suction ends 54, 56 (FIG. 3). A central passage 58 extends through the body member 52 from the connection end 54 to the suction end 56 (FIG. 4). The connection end 54 is attached to the hose 12, while the suction end 56 has a suction flange 60 through which both intra- and extra-oral suction flow.

In greater detail, the suction flange 60 has a center orifice 62 for providing intra-oral evacuation. An intra-oral tube 64 is mounted through the center orifice 62 so that a base portion 66 is disposed inside the body member 52 while a tip portion 68 extends outside the body member for insertion into the mouth during dental procedures (FIG. 4). The end of the tip portion 68 has a suction opening 70 through which intra-oral suction flows.

The suction flange 60 also has at least one outer orifice 72 for providing extra-oral evacuation (FIG. 3). The outer orifices 72 extend through the suction flange 60 between the center orifice 62 and a periphery 74 of the suction flange 60. In the illustrated embodiment, the outer orifices 72 are radially disposed about the center of the suction flange and are formed as arcuate slots. Extra-oral suction flows through the outer orifices 72 to the central passage 58 and, ultimately, to the evacuation apparatus 10.

The evacuation hand piece 14 preferably has a mask 76 for optimizing the extra-oral suction flow. The mask 76 is attached to the body member 52 near the suction end 60. The mask has a side wall 78 with an open end 80 through which the extra-oral suction flows. The open end 80 has a cross-sectional area greater than that of the body member 52. Accordingly, the mask increases the extra-oral suction area.

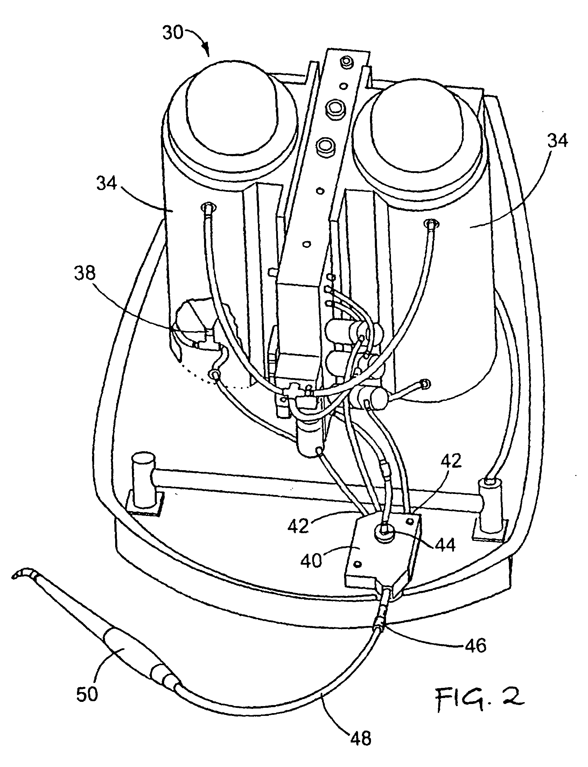

The evacuation apparatus 10 described above may be used in combination with an air abrasion system 30 having a continuous purge feature in order to reduce the amount of mess generated during dental procedures. As best shown in FIG. 2, the air abrasion system 30 has a high pressure gas source 32 (FIG. 1) connected to a pair of dispensing chambers 34. The dispensing chambers 34 have reservoirs for holding abrasive material and have motors for advancing the abrasive material through a chamber outlet port 38. A mixing block 40 is provided having powder inlet ports 42 fluidly connected to the chamber outlet ports 38. The mixing block 40 also has a purge port 44 which is fluidly connected to the pressurize gas source 32. The purge port 44 and powder inlet ports 42 have associated therewith bores which extend through the mixing block 40 and converge to form a common outlet port 46. The common outlet port 46 is releaseably connected to a delivery hose 48 with attached abrasion hand piece 50. In operation, abrasive material from either of the dispensing chambers 34 is mixed with pressurized gas and propelled through the mixing block 40, delivery hose 48, and abrasion hand piece 50.

In accordance with certain aspects of the present invention, the air abrasion system 30 continuously delivers pressurized gas to the purge port 44 to remove any residual abrasive material from the mixing block 40, delivery hose 48, and abrasion hand piece 50. As noted above, residual abrasive material in these components restricts the velocity of subsequently delivered abrasive material by the system. By continuously feeding pressurized gas through the purge port 44, the mixing block, delivery hose, and abrasion hand piece are constantly purged of abrasive material. Accordingly, the present system avoids creating puffs of abrasive material, thereby decreasing the amount of mess generated during dental procedures. When combined with the evacuation apparatus 10 described above, the air abrasion system 30 provides apparatus for minimizing the amount of stray abrasive material which is deposited in the area surrounding the patient's mouth.

From the foregoing, it will be apparent that the present invention brings to the art new and improved evacuation apparatus for collecting abrasive material and other debris during dental procedures. The evacuation apparatus includes a cyclone separator which collects a majority of the particulates generated during the procedure. The cyclone separator allows the apparatus to perform intra-oral suction and to use a filter having small pore sizes which remove finer particles. The life of the filter is also increased and the evacuation apparatus operates at full suction for a longer period of time. The evacuation apparatus is used with an air abrasion system having a continuous purge feature to reduce the amount of mess generated during a dental procedure. The continuous purge feature clears the mixing block, delivery hose, and abrasion hand piece of residual abrasive material, thereby eliminating puffs of abrasive material from being delivered by the system. As a result, less mess is generated by stray abrasive material and therefore the evacuation apparatus more efficiently collects abrasive material during the procedure.

## Claims

1. An abrasion apparatus for delivering a mixture of pressurized gas and abrasive powder for use in dental procedures, the air abrasion apparatus adapted to be attached to a hose connected to an abrasive hand piece, the apparatus comprising the combination of:
(a) a pressurized gas source;
(b) a dispensing chamber having a reservoir for holding a supply of abrasive powder,
(c) an inlet port adapted for fluid communication with the pressurized gas source,
(d) a powder outlet port, and motor means for advancing abrasive powder through the powder outlet port;
(e) a mixing block having a powder inlet port fluidly connected to the powder outlet port, and a purge port adapted for fluid connection for the pressurize gas source, the mixing block having a common outlet connection adapted for releasable attachment to the hose;
(f) vacuum pump for creating a suction flow;
(g) filter located upstream of the vacuum pump; and
(h) cyclone separator located upstream of the filter, the cyclone separazor being sized to remove particulates that are heavier than air from the suction flow;
wherein pressurized gas is supplied to the purge port for continuous flow through the mixing block, hose and hand piece.

2. The abrasion apparatus of claim 1, in which a cup is attached to a bottom of the cyclone separator away from the suction flow, the cup collecting the particulates removed from the suction flow by the cyclone separator.

3. The abrasion apparatus of claim 1 further comprising an evacuation hand piece located upstream of and connected to the cyclone separator by a hose, the evacuation hand piece having a connection end for attachment to the hose and a suction end, a central passage extending through the attachment end to the suction end, the suction end providing both intra- and extra-oral evacuation means.

4. The abrasion apparatus of claim 3 in which the extra-oral evacuation means includes an outer orifice extending through the suction end, and the intra-oral evacuation means includes an intra-oral tube extending through a center orifice in the suction end, the outer orifice and intra-oral tube leading to the central passage.

5. The abrasion apparatus according to claim 1, comprising an evacuation apparatus for creating a suction flow to evacuate debris during dental procedures, the evacuation apparatus comprising:
(i) a vacuum pump for creating a suction flow;
(ii) a two stage filter means for removing debris from the suction flow, the two stage filter means including a filter located upstream of the vacuum pump and a cyclone separator located upstream of the filter, wherein the cyclone separator removes at least 90% of the debris which is heavier than air from the suction flow, the filter thereby having smaller pores for removing lighter debris from the suction flow and a reduced physical size.

6. The abrasion apparatus of claim according to claim 5, wherein in the evacuation apparatus a cup is attached to a bottom of the cyclone separator removed from the suction flow, the cup collecting the debris separated by the cyclone separator.

7. The abrasion apparatus of claim according to claim 5, wherein the evacuation apparatus of claim 1 further comprises an evacuation hand piece located upstream of and connected to the cyclone separator by a hose, the evacuation hand piece having a connection end for attachment to the hose and a suction and, a central passage extending through the attachmment end to the suction end, the suction end providing both intra and extraoral evacuation means.

8. The abrasion apparatus according to claim 5, wherein the extra-oral evacuation means includes an outer orifice extending through the suction end, and the intra-oral evacuation means includes an intra-oral tube extending through a center in the suction end, the outer orifice and intra-oral tube leading to the central passage.

9. The abrasion apparatus according to claim 5, wherein the filter is a HEPA filter.

## Patentansprüche

1. Abtragungs-Vorrichtung zum Abgeben einer Mischung aus Druckgas und Abtragungs-Pulver zur Anwendung in zahnärztlichen Verfahren, wobei die Luftabtragungs-Vorrichtung zur Verbindung mit einem Schlauch eingerichtet ist, der mit einem Abtragungs-Handstück verbunden ist, wobei die Vorrichtung die Kombination umfasst:
(a) eine Druckgas-Quelle,
(b) eine Abgabe-Kammer mit einem Reservoir zur Aufnahme eines Vorrates an Abtraguügs-Pulver,
(c) eine Einlassöffnung zur Strömungsverbindung mit der Druckgas-Quelle,
(d) eine Pulver-Auslassöffnung und eine Motor-Einrichtung zum Befördern von Abtragungs-Pulver durch die Pulver-Auslassöffnung,
(e) einen Mischblock mit einer Pulver-Einlassöffnung, die strömungsmäßig mit der Pulver-Auslassöffnung verbunden ist, und einer Reinigungs-Öffnung zur Strömungsverbindung mit der Druckgas-Quelle, wobei der Mischblock eine gemeinsame Auslassverbindung aufweist, die zur lösbaren Befestigung an dem Schlauch eingerichtet ist,
(f) Vakuumpumpe zum Erzeugen eines Saugstromes,
(g) Filter, der stromaufwärts der Vakuumpumpe angeordnet ist und
(h) Zyklon-Separator, der stromaufwärts des Filters angeordnet ist, wobei der Zyklon-Separator eine solche Größe hat, dass er Teilchen, die schwerer als Luft sind, aus dem Saugstrom entfernt,
wobei das Druckgas zum kontinuierlichen Strömen durch Mischblock, Schlauch und Handstück der Reinigungs-Öffnung zugeführt wird.

2. Abtragungs-Vorrichtung nach Anspruch 1, bei der ein Becher an einen Boden des Zyklon-Separators, entfernt von dem Saugstrom, angebracht ist, wobei der Becher die durch den Zyklon-Separator aus dem Saugstrom entfernten Teilchen sammelt.

3. Abtragungs-Vorrichtung nach Anspruch 1, weiter umfassend ein Evakuierungs-Handstück, das stromaufwärts des Zyklon-Separators angeordnet und durch einen Schlauch mit diesem verbunden ist, wobei das Evakuierungs-Handstück ein Verbindungsende zur Befestigung an dem Schlauch und ein Saugende aufweist, ein zentraler Durchgang sich durch das Befestigungsende bis zum Saugende erstreckt, wobei das Saugende sowohl eine intra- als auch extra-orale Evakuierungs-Einrichtung bereitstellt.

4. Abtragungs-Vorrichtung nach Anspruch 3, bei der die extraorale Evakuierungs-Einrichtung eine äußere Öffnung einschließt, die sich durch das Saugende erstreckt, und die intraorale Evakuierungs-Einrichtung ein intraorales Rohr einschließt, das sich durch eine zentrale Öffnung in das Saugende erstreckt, wobei die äußere Öffnung und das intraorale Rohr zu dem zentralen Durchgang führen.

5. Abtragungs-Vorrichtung nach Anspruch 1, umfassend eine Evakuierungs-Vorrichtung zum Erzeugen eines Saugstromes zum Evakuieren von Trümmerteilchen während zahnärztlicher Verfahren, wobei die Evakuierungs-Vorrichtung umfasst:
(i) eine Vakuumpumpe zum Erzeugen eines Saugstromes,
(ii) eine Zweistufen-Filtereinrichtung zum Entfernen von Trümmerteilchen aus dem Saugstrom, wobei die Zweistufen-Filtereinrichtung einen stromaufwärts der Vakuumpumpe angeordneten Filter und einen stromaufwärts des Filters angeordneten Zyklon-Separator einschließt, wobei der Zyklon-Separator mindestens 90% der Trümmerteilchen, die schwerer als Luft sind, aus dem Saugstrom entfernt, wodurch der Filter kleinere Poren zur Entfernung leichterer Trümmerteilchen aus dem Saugstrom und eine verringerte physische Größe aufweist.

6. Abtragungs-Vorrichtung nach Anspruch 5, worin in der Evakuierungs-Vorrichtung ein Becher, entfernt von der Saugströmung, an einen Boden des Zyklon-Separators angebracht ist, wobei der Becher die durch den Zyklon-Separator abgetrennten Trümmerteilchen sammelt.

7. Abtragungs-Vorrichtung nach Anspruch 5, worin die Evakuierungs-Vorrichtung nach Anspruch 1 weiter ein Evakuierungs-Händstück umfasst, das stromabwärts des Zyklon-Separators angeordnet und mit diesem durch einen Schlauch verbunden ist, wobei das Evakuierungs-Handstück ein Verbindungsende zur Befestigung an dem Schlauch und ein Saugende aufweist, wobei sich ein zentraler Durchgang durch das Befestigungsende bis zum Saugende erstreckt, und das Saugende sowohl intra- als auch extra-orale Evakuierungs-Einrichtungen betreitstellt.

8. Abtragungs-Vorrichtung nach Anspruch 5, worin die extraorale Evakuierungs-Einrichtung eine äußere Öffnung einschließt, die sich durch das Saugende erstreckt, und die intraorale Evakuierungs-Einrichtung ein intraorales Rohr einschließt, das sich durch ein Zentrum im Saugende erstreckt, wobei die äußere Öffnung und das intraorale Rohr zum zentralen Durchgang führen.

9. Abtragungs-Vorrichtung nach Anspruch 5, worin der Filter ein HEPA-Filter ist.

## Revendications

1. Appareil d'abrasion destiné à fournir un mélange de gaz pressurisé et de poudre abrasive pour une utilisation dans des traitements dentaires, l'appareil d'abrasion à l'air étant adapté pour être fixé à un tuyau connecté à une pièce à main abrasive, l'appareil comprenant la combinaison de :
a) une source de gaz pressurisé ;
b) une chambre de distribution ayant un réservoir pour contenir une réserve de poudre abrasive ;
c) un orifice d'entrée adapté pour une communication hydraulique avec la source de gaz pressurisé;
d) un orifice de sortie de poudre, et un moyen moteur pour faire passer la poudre abrasive dans l'orifice de sortie de poudre ;
e) un bloc de mélange ayant un orifice d'entrée de poudre connecté de manière hydraulique à l'orifice de sortie de poudre, et un orifice de purge adapté pour une connexion hydraulique pour la source de gaz pressurisé, le bloc de mélange ayant une connexion de sortie commune adaptée pour une fixation amovible au tuyau ;
f) une pompe à vide pour créer un flux d'aspiration ;
g) un filtre situé en amont de la pompe à vide ; et
h) un séparateur à cyclone situé en amont du filtre, le séparateur à cyclone étant dimensionné pour supprimer les particules qui sont plus lourdes que l'air du flux d'aspiration ;
dans lequel le gaz pressurisé est fourni à l'orifice de purge pour un flux continu dans le bloc de mélange, le tuyau et la pièce à main.

2. Appareil d'abrasion selon la revendication 1, dans lequel une coupelle est fixée à un fond du séparateur à cyclone à distance du flux d'aspiration, la coupelle recueillant les particules supprimées du flux d'aspiration par le séparateur à cyclone.

3. Appareil d'abrasion selon la revendication 1, comprenant en outre une pièce à main d'évacuation située en amont de, et connectée au, séparateur à cyclone par un tuyau, la pièce à main d'évacuation ayant une extrémité de connexion pour la relier au tuyau et une extrémité d'aspiration, un passage central s'étendant à travers l'extrémité de fixation jusqu'à l'extrémité d'aspiration, l'extrémité d'aspiration fournissant à la fois un moyen d'évacuation intra-oral et extra-oral.

4. Appareil d'abrasion selon la revendication 3, dans lequel le moyen d'évacuation extra-oral inclut un orifice extérieur s'étendant à travers l'extrémité d'aspiration, et le moyen d'évacuation intra-oral inclut un tube intra-oral s'étendant à travers un orifice central dans l'extrémité d'aspiration, l'orifice extérieur et le tube intra-oral menant au passage central.

5. Appareil d'abrasion selon la revendication 1, comprenant un appareil d'évacuation pour créer un flux d'aspiration pour évacuer les débris pendant des traitements dentaires, l'appareil d'évacuation comprenant :
(i) une pompe à vide pour générer un flux d'aspiration ;
(ii) un moyen de filtre double pour enlever les débris du flux d'aspiration, le moyen de filtre double incluant un filtre situé en amont de la pompe à vide et un séparateur à cyclone situé en amont du filtre, dans lequel le séparateur à cyclone supprime au moins 90 % des débris qui sont plus lourds que l'air du flux d'aspiration, le filtre ayant ainsi des pores plus petits pour supprimer des débris plus légers du flux d'aspiration et ceux d'une taille physique réduite.

6. Appareil d'abrasion selon la revendication 5, dans lequel dans l'appareil d'évacuation, une coupelle est fixée à un fond du séparateur à cyclone supprimé du flux d'aspiration, la coupelle recueillant les débris séparés par le séparateur à cyclone.

7. Appareil d'abrasion revendiqué selon la revendication 5, dans lequel l'appareil d'évacuation de la revendication 1 comprend en outre une pièce d'évacuation à main située en amont du, et connectée au, séparateur à cyclone par un tuyau, la pièce à main d'évacuation ayant une extrémité de connexion pour une fixation au tuyau et une aspiration et un passage central s'étendant à travers l'extrémité de fixation jusqu'à l'extrémité d'aspiration, l'extrémité d'aspiration fournissant à la fois des moyens d'évacuation intra et extra-oraux.

8. Appareil d'abrasion selon la revendication 5, dans lequel le moyen d'évacuation extra-oral inclut un orifice extérieur s'étendant à travers l'extrémité d'aspiration, et le moyen d'évacuation intra-oral inclut un tube intra-oral s'étendant à travers un centre dans l'extrémité d'aspiration, l'orifice extérieur et le tube intra-oral menant au passage central.

9. Appareil d'abrasion selon la revendication 5, dans lequel le filtre est un filtre HEPA.
